# EUROPÄISCHE PATENTSCHRIFT

(11) **EP 1 207 989 B1**
(45) Veröffentlichungstag und Bekanntmachung des Hinweises auf die Patenterteilung: **06.08.2003**
(21) Anmeldenummer: 00960212.9
(22) Anmeldetag: 31.08.2000
(51) Int. Cl.: B29C 44/34

(54) **EINRICHTUNG ZUR BEIMISCHUNG VON GAS ZU EINER KUNSTSTOFFSCHMELZE**
DEVICE FOR ADMIXING GAS TO A PLASTIC MELT
DISPOSITIF POUR MELANGER UN GAZ A UNE MATIERE PLASTIQUE EN FUSION

(30) Priorität: 31.08.1999 AT 58499 U
(43) Veröffentlichungstag der Anmeldung: 29.05.2002
(73) Patentinhaber: ENGEL MASCHINENBAU GESELLSCHAFT MBH, A-4311 Schwertberg (AT)
(72) Erfinder: STEINBICHLER, Georg, A-8786 Rottenmann (AT)
(74) Vertreter: Hofinger, Stephan
(86) Internationale Anmeldenummer: AT0000236
(87) Internationale Veröffentlichungsnummer: WO01015880

(56) Entgegenhaltungen:
- EP-A- 0 486 957
- US-A- 5 866 053
- BALDWIN D F ET AL: "MICROCELLULAR SHEET EXTRUSION SYSTEM PROCESS DESIGN MODELS FOR SHAPING AND CELL GROWTH CONTROL" POLYMER ENGINEERING & SCIENCE,SOCIETY OF PLASTICS ENGINEERS,US, Bd. 38, Nr. 4, April 1998 (1998-04), Seiten 674-688, XP000851372 ISSN: 0032-3888

## Beschreibung

Bereits Mitte der 60-iger Jahre wurden Verfahren zur Herstellung von Strukturschaumteilen aus thermoplastischen Kunststoffen entwickelt. Unter Verwendung dieser Verfahren entstehen Formteile mit einer mehr oder weniger kompakten Außenhaut und einem geschlossenzelligen geschäumten Kern. Für Anwendungen besonders interessant ist die mögliche Gewichtseinsparung und die Steifigkeitserhöhung bei gleichem Bauteilgewicht.

Grundsätzlich unterscheiden sich die bekannten Verfahren in folgenden Punkten:
- Einsatz von chemischem oder physikalischem Treibmittel,
- Schmelzefüllung des Werkzeuges mit oder ohne Gasgegendruck,
- Arbeitsweise mit oder ohne Formhohlraumveränderung für den Aufschäumvorgang und
- Verwendung eines Werkzeugkühl- oder kombinierten Heiz-Kühlsystems.

Beim klassischen TSG-Verfahren (Thermoplast-Schaumspritzgußverfahren) werden vor allem mit chemischen Treibmitteln versehene Thermoplastschmelzen mit hoher Geschwindigkeit eingespritzt. Der Werkzeughohlraum wird nur teilweise gefüllt - die Restfüllung bzw. Ausformung der Bauteilgeometrie erfolgt durch den Expansionsdruck des Treibmittels. Da chemische Treibmittel nur Schäumdrücke bis zu 30 bar aufbringen, ist das Verfahren hinsichtlich Wanddicke und überwindbarer Fließwege sowie Ausformung komplexerer Bauteilgeometrien begrenzt.

Chemische Treibmittel sind Substanzen, die sich unter Wärmeeinwirkung zersetzen und dabei gasförmige Zersetzungsprodukte abgeben, die den Schäumvorgang bewirken. Physikalische Treibmittel für das Schaumspritzgießen sind in der Kunststoffschmelze gelöste inerte Gase wie zB Stickstoff oder bei niedriger Temperatur verdampfte Flüssigkeiten. Damit ist man vom Temperaturzersetzungsbereich chemisch wirkender Treibmittel unabhängig und kann auch ansonsten gegen Schaltprodukte chemischer Treibmittel empfindliche Kunststoffe verschäumen.

Versetzt man die verwendeten inerten Gase wie zB Stickstoff oder CO₂ vor der Zudosierung in einen superkritischen Zustand, wie dies in US-A 4,473,665, US-A 5,160,674 und US-A 5,866,053 gelehrt wird, gelingt es, eine besonders gleichmäßig verteilte Zellstruktur zu erzeugen. Die US-A 5,866,053 offenbart eine Einrichtung zur Beimischung von superkritischem und daher weitgehend inkompressiblem Gas zu einer Kunststoffschmelze mit Gasinjektionen, welche in die Mischstufe einer auch zur Plastifizierung des Kunststoffs dienenden Schnecke münden.

Dieser superkritische Zustand eines Gases bietet für den Schäumprozeß folgende Vorteile:
- Flüssigkeitsähnliche geringe Kompressibilität für eine mengenmäßig genaue Dosierung
- Hohe Löslichkeit und Diffusionsgeschwindigkeit für gleichmäßige Verteilung und Lösung des Gases in der Schmelze.

Die wesentlichen Prozeßschritte des Mikrostrukturschäumverfahrens sind:
- Homogenes Aufschmelzen des Kunststoffes im Barriereschneckenteil
- Genaue mengenmäßige Zudosierung des in den superkritischen Zustand versetzten Gases über Gasinjektoren im Massezylinder
- Feine Verteilung und Lösung des Gases in der Polymerschmelze in der Schneckenmischzone
- Bildung fein dispergierter Nukleierungskeime durch den Druckabfall beim beginnenden Werkzeugfüllvorgang
- Zellbildung durch Ausfall von gelöstem Gas aus der Schmelze während des Werkzeugfüllvorganges
- Zellwachstum durch den wirkenden Gasdruck in der Abkühlphase durch Schwindungskompensation.

Die wesentlichen Vorteile des Verfahrens sind:
- Durch Einsatz des "superkritischen Fluids" als physikalisches Treibmittel wird die Viskosität der Schmelze deutlich herabgesetzt. In Extremfällen reduziert sich der Einspritzdruck bis auf 50 % bei gleicher Massetemperatur. Realisierbare Fließweg-Wanddickenverhältnisse können auch für schwerer fließende Kunststoffe deutlich gesteigert werden.
- Durch die verbesserte Fließfähigkeit und den intern über den Gasdruck wirkenden Nachdruck kann die benötigte Schließkraft je nach Anwendungsfall bis auf 60 % reduziert werden.
- Der intern wirkende Gasdruck übernimmt die Nachdruckfunktion - Einfallstellen auch am Fließwegende sind dadurch vermeidbar. Bei geringerem Schäumgrad ist trotz schlechterer Wärmeleitfähigkeit die Möglichkeit zur Kühlzeiteinsparung gegeben. Dies vor allem dann, wenn die in die Nachdruckphase ansonsten noch eingeschobene Schmelzmenge die Kühlzeit bestimmt.
- Bei gleicher gewünschter Fließfähigkeit kann die Verarbeitungstemperatur deutlich gesenkt und damit auch die Kühlzeit verkürzt werden.
- Der geringere Fülldruck und die gleichmäßigere Druckverteilung aufgrund des wirkenden Gasdruckes ohne partieller Nachdruckeinwirkung reduziert Verzugsprobleme auf ein Minimum.

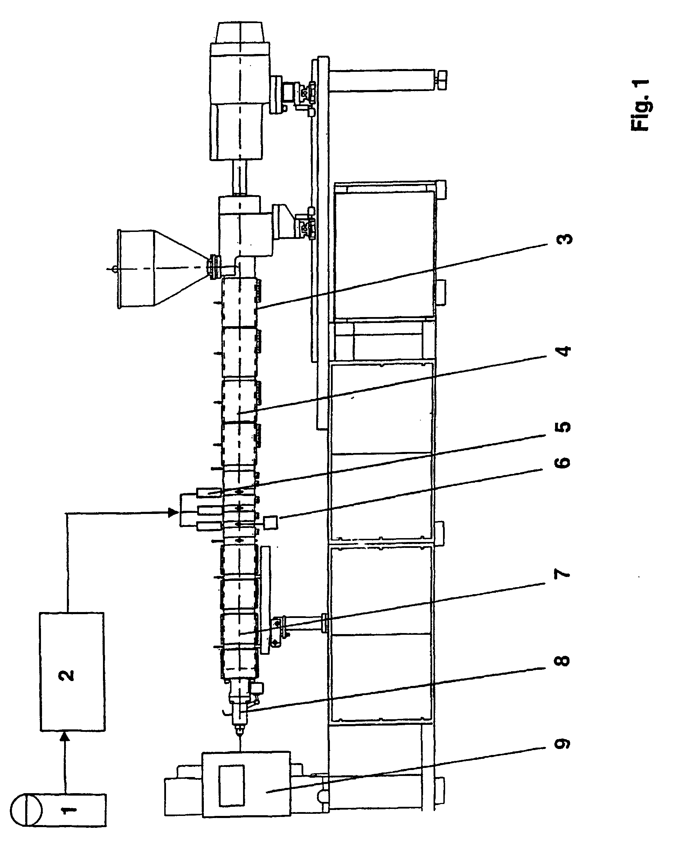

In Fig. 1 wird die derzeit für das beschriebene Verfahren verwendete, den Stand der Technik darstellende Einrichtung beschrieben. Es handelt sich um eine Einrichtung zur Beimischung von komprimiertem Gas zu einer Kunststoffschmelze mit Gasinjektoren, welche in die Mischstufe einer auch zur Plastifizierung des Kunststoffes dienenden Schnecke münden mit folgenden wesentlichen Bestandteilen:
- 1: Gasversorgung aus Flaschen, Flüssiggastank oder Gasgewinnungsanlage durch Luftzerlegung
- 2: Gasaufbereitungsanlage mit Verdichter und Gasmengendosiereinheit
- 3: Massezylinder
- 4: Schnecke mit Plastifizierteil und nachgeschalteter Treibmittel-Mischstufe
- 5: Gasinjektoren
- 6: Massedrucksensor
- 7: Luftgekühlte Heizbänder in der Mischstufe
- 8: Verschlußdüse
- 9: Maschinensteuerung mit verfahrensspezifischer Software.

Entscheidend für den Schäumvorgang ist die gleichmäßige Gasmengenzudosierung über die Gasinjektoren in die Schmelze. Beim bekannten Verfahren erfolgt die Gasmengendosierung über Meßzellen und Mengenregelventile in der Gasaufbereitungsanlage 2. Dabei muß das Gas über längere Schlauch- und/oder Rohrverbindungen zu den Gasinjektoren 5 geleitet werden. Es kommt zu Dosierungenauigkeiten aufgrund der Kompressibilität und Druckverlusten in den Leitungen. Weiters gibt es keine Rückkopplung zwischen Schmelzeförderleistung oder Plastifizier- und Mischschnecke und der Gasmengendosiereinheit in der Gasaufbereitungsanlage. Bei zeitlich auftretenden Förderleistungsunterschieden in der Schnecke wird immer die gleiche Gasmenge zudosiert. Unterschiedliche Gasmengen in einem betrachteten Schmelzvolumenselement sowie partiell unterschiedliche Schäumgrade im Bauteil sind die Folge.

Die Erfindung geht von der Überlegung aus, daß nach dem Erreichen des superkritischen Zustandes das Gas sich weitgehend wie eine Flüssigkeit verhält und seine Dichte im Rahmen der auftretenden Druckunterschiede in guter Näherung als konstant angesehen werden kann. Das erlaubt eine genau dosierte Gasbeimischung mit einfachen konstruktiven Mitteln, indem vorgesehen wird, daß den Gasinjektoren ein Dosierkolben unmittelbar vorgelagert ist, dessen Verlaufgeschwindigkeit umso größer ist, je größer die Rücklaufgeschwindigkeit der Schnecke beim Plastifizierungsvorgang ist.

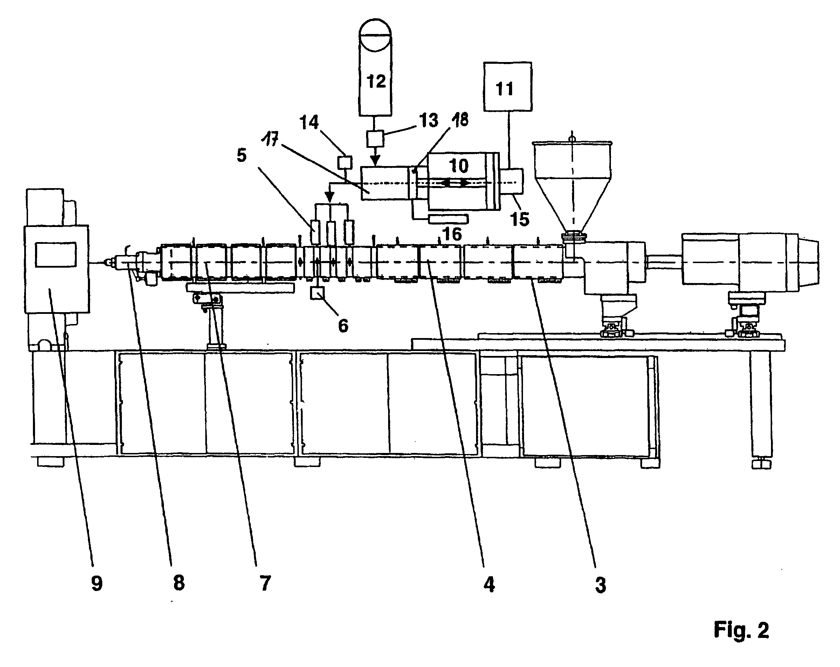

Ein Ausführungsbeispiel einer derartigen Einrichtung wird anschließend anhand von Fig. 2 beschrieben.

Die Gasmengenzudosierung erfolgt über einen durch ein Hydraulikaggregat 11 angetriebenen Druckübersetzer 10. Der Druckübersetzer ist in unmittelbarer Nähe der Gasinjektoren 5 am Massezylinder 3 montiert, um kürzeste Leitungslängen und damit auch geringste Totvolumina zu haben. Die Versorgung des Druckübersetzers 10 mit Gas (zB N₂ oder CO₂) erfolgt über eine Gasvorverdichtereinheit 12 oder direkt aus Gasflaschen, Flüssigkeitstanks oder Luftzerlegungsanlagen. Der Druckübersetzer kann auch die Gasverdichtungsaufgabe übernehmen. Damit kann auf eine zusätzliche Gasvorverdichtereinheit verzichtet werden.

### Verfahrensablauf:

- Das Gaseinströmventil 13 am Druckübersetzer 10 wird geöffnet, das Gas strömt in den Druckübersetzerraum ein. Der Druckübersetzer wird durch das einströmende Gas oder auch mit hydraulischer Unterstützung zurückgedrückt und dabei das Öl auf der Hydraulikseite aus dem Kolben auf Tank ausgeschoben.
- Mit Erreichen der Kolbenendlage wird das Gaseinströmventil 13 geschlossen.
- Die Verdichtung des Gases im Druckübersetzer 10 erfolgt durch eine hydraulisch gesteuerte oder geregelte Vorfahrbewegung bis ein an der Maschinensteuerung 9 eingestellter Gasdruck erreicht wird. Die Messung des aktuellen Gasdruckes erfolgt über den Gasdrucksensor 14.
- Mit Beginn des Plastifizier- und Schmelzdosiervorganges durch Start der Schneckendrehbewegung wird der erste Gasinjektor 5 geöffnet und abhängig von der gemessenen Schneckenrücklaufgeschwindigkeit die Kolbenvorlaufgeschwindigkeit des Druckübersetzers 10 über ein Regelventil 15 geregelt, um eine an der Steuerung voreingestellte Gasmenge in den Massezylinder der Spritzgießmaschine einzupressen.
- Bei Erreichen einer bestimmten Schneckenposition wird der nächste Gasinjektor 5 geöffnet. Über den Drucksensor 6 wird der herrschende Schmelzedruck im Massezylinder in der Nähe aer Gasinjektoren gemessen. Der gemessene Schmelzedruck für den Schmelztransport durch die Gasmischzone und zur Überwindung des Staudruckes (eingestellter Gegendruck für die Rückwärtsbewegung der Schnecke) liefert die notwendige Information über die erforderliche Druckhöhe für die Vorverdichtung des Gases. Damit wird erreicht, daß das Gas im Druckübersetzer 10 nicht mehr stark verdichtet werden muß, bevor Gas gegen den herrschenden Schmelzedruck (zB 200 bar) eindosiert wird.
- Der im Druckübersetzer gemessene Gasdruck und der gemessene Schmelzedruck können für die Überwachung des Schmelze- und Gasdosierprozesses herangezogen werden. Die Prozeßgrafik in der Maschinensteuerung 9 erfaßt die Druckverläufe und überwacht die Reproduziergenauigkeit des Dosierprozesses über ein vorgegebenes Toleranzfeld.
- Die eingepreßte Gasmenge wird über eine Gasdichtefunktion in Abhängigkeit von Druck und Temperatur für jeden Schmelzdosierzyklus ermittelt und anhand einstellbarer Grenzwerte über die Maschinensteuerung 9 überwacht. Dafür ist der Druckübersetzer mit einem Wegmeßsystem 16 ausgerüstet.
- Mit Ende des Schmelzdosiervorganges wird der letzte Gasinjektor geschlossen und die Schmelze unter einem bestimmten Druck gehalten, um ein vorzeitiges Aufschäumen zu vermeiden.

Mit der Druckübersetzerlösung können auch mehrere Spritzgießmaschinen ohne Verwendung einer Gasaufbereitungseinheit an jeder Spritzgießmaschine über Gasringleitungen versorgt werden.

## Patentansprüche

1. Einrichtung zur Beimischung von superkritischem und daher weitgehend inkompressiblem Gas zu einer Kunststoffschmelze, mit Gasinjektoren (5), welche in die Mischstufe einer auch zur Plastifizierung des Kunststoffes dienenden Schnecke (4) münden, **dadurch gekennzeichnet, daß** den Gasinjektoren (5) ein Dosierkolben (18) unmittelbar vorgelagert ist, dessen Verlaufgeschwindigkeit umso größer ist, je größer die Rücklaufgeschwindigkeit der Schnecke (4) beim Plastifizierungsvorgang ist.

2. Einrichtung nach Anspruch 1, **dadurch gekennzeichnet, daß** der Dosierkolben (18) Teil eines Druckübersetzers (10) ist.

3. Einrichtung nach Anspruch 1 oder 2, **dadurch gekennzeichnet, daß** ein Sensor (6) zur Messung des Schmelzdruckes vorgesehen ist.

## Claims

1. Apparatus for adding supercritical and therefore substantially incompressible gas to a molten plastic material, with gas injectors which open into the mixing stage of a screw which also serves for plasticising the plastic material, **characterised in that** disposed immediately upstream of the gas injectors (5) is a metering piston (18) whose travel speed is proportionally greater, the greater is the return travel speed of the screw (4) in the plasticising procedure.

2. Apparatus according to claim 1 **characterised in that** the metering piston (18) is part of a pressure booster (10).

3. Apparatus according to claim 1 or claim 2 **characterised in that** there is provided a sensor (6) for measuring the molten material pressure.

## Revendications

1. Dispositif pour ajouter un gaz supercritique et donc largement incompressible à une matière plastique en fusion, avec des injecteurs à gaz (5), lesquels débouchent dans l'étage mélangeur d'une vis sans fin (4) servant également à la plastification de la matière plastique, **caractérisé en ce qu'**un piston doseur (18) est directement agencé avant les injecteurs à gaz (5), dont la vitesse de course est d'autant plus grande que la vitesse de retour de la vis sans fin (4) est grande lors du processus de plastification.

2. Dispositif selon la revendication 1, **caractérisé en ce que** le piston doseur (18) fait partie d'un surpresseur (10).

3. Dispositif selon la revendication 1 ou 2, **caractérisé en ce qu'**un capteur (6) est prévu pour effectuer la mesure de la pression de fusion.
